# EUROPEAN PATENT SPECIFICATION

(11) **EP 1 344 282 B1**
(45) Date of publication and mention of the grant of the patent: **29.03.2006**
(21) Application number: 01988058.2
(22) Date of filing: 21.12.2001
(51) Int. Cl.: H01R 12/22

(54) **A FLAT CONTACT ELEMENT FOR A SMART CARD CONNECTOR AND A SMART CARD CONNECTOR USING A FLAT CONTACT ELEMENT**
FLACHES KONTAKTELEMENT FÜR EINEN CHIPKARTENVERBINDER UND CHIPKARTENVERBINDER MIT FLACHEM KONTAKTELEMENT
ELEMENT DE CONTACT PLAT POUR CONNECTEUR DE CARTE A PUCE ET CONNECTEUR DE CARTE A PUCE UTILISANT UN ELEMENT DE CONTACT PLAT

(30) Priority: 21.12.2000 DE 10064137
(43) Date of publication of application: 17.09.2003
(73) Proprietor: AMPHENOL-TUCHEL ELECTRONICS GmbH, D-74080 Heilbronn (DE)
(72) Inventor: SEIDEL, Volker, 74223 Flein (DE)
(74) Representative: Wagner, Karl H.
(86) International application number: PCT/EP2001/015198
(87) International publication number: WO 2002/056419

(56) References cited:
- EP-A- 0 969 408
- EP-A- 1 017 136
- US-A- 6 000 969
- US-A- 6 120 328

## Description

### Technical Field

This invention relates generally to a contact element and more particularly to a contact element for a smart card connector. This invention further relates to a smart card connector, in particular to a SIM card connector using the flat contact element.

### Background Art

Contact elements as well as flat contact elements are used in many areas of technology and in particular in smart card connectors which are used to provide an electrical connection to contact zones of a smart card used together with a smart card connector should have dimensions as small as possible, but good electric and mechanical stability is also important.

EP 1 917 136 A1 relates to a connector with prestressed contacts. The contacts disclosed do not comprise a frame forming a window adapted to generate part of the conctact spring force of the contact element.

U.S. Patent 6,120,328 discloses a smart card connector with contacts including a resiliently deflectable contact blade and a contact rear portion. The contact blade has a free-front end with a contact location where the contact engages a smart card pad. The contact rear portion includes a mount part that lies directly rearward of the blade and a pair of retainers lying at laterally opposite sides of the mount part and connected thereto by lateral joiner parts. However, no frame providing a portion of the spring force or resiliency is present.

U.S. Patent 6,000,969 relates to a contact carrier. The contacts which have a relatively large height do not have any frame providing for part of the spring force in their contacting position.

In accordance with the present invention a smart card connector as set forth in claim 1 is provided. Preferred embodiments of the invention are disclosed in the dependent claims.

### Disclosure of the Invention

In one aspect of the present invention a contact element is provided which is of a flat design and comprises a frame which adds to the resiliency or spring action of the contact element at the time, the contact element makes contact. The flat contact element comprises a mounting section by means of which the contact element can be fixedly mounted at a contact support. The contact element comprises adjacent to the mounting section a contacting section as well as a spring or bending section. Preferably, a contact arm supported by the frame extends out of the plane defined by the frame. The contact arm has a free end forming a cusp-shaped contact zone adapted to contact a contact zone provided on a smart card or on a SIM card.

### Brief Description of the Drawings

- Fig. 1: is a top plan view of a smart card connector in the form of a SIM card connector according to an embodiment of the invention using a contact element of the invention;
- Fig. 2: is a view onto the bottom surface of the smart card connector of Fig. 1;
- Fig. 3: is a side elevational view of the smart card connector of Fig. 1;
- Fig. 4: is a detail of the top plan view of Fig. 1;
- Fig. 5: is a detail of Fig. 2;
- Fig. 6: is a side elevational view of an embodiment of the contact element of the invention as it is used in the SIM card connector shown in Fig. 1;
- Fig. 7: is a top plan view of the contact element of Fig. 6;
- Fig. 8: is a frontal view of the contact element shown in Fig. 6;
- Fig. 9: is an enlarged sectional view along line 9-9 of Fig. 1;
- Fig. 10: is an enlarged perspective view of the contact element shown in Figs. 6 through 8;
- Fig. 11: is an enlarged perspective view of a detail of the smart card connector shown in Fig. 1;
- Fig. 12: an enlarged perspective view of the smart card connector shown in Fig. 2.

### Best Mode for Carrying out the Invention

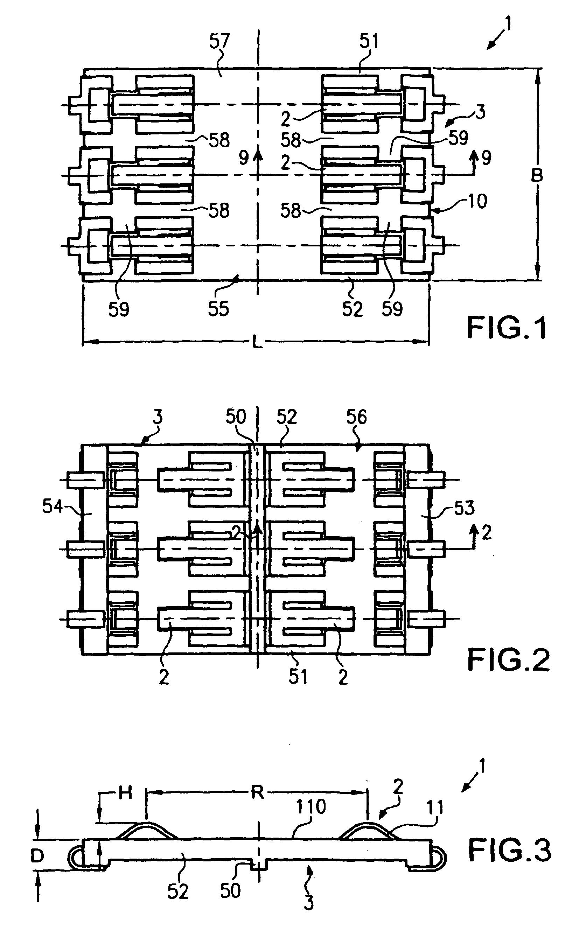

Referring now to Fig. 1, there is shown a smart card connector 1 according to the present invention. The smart card connector 1 as shown is specifically used for contacting a smart card in the form of a SIM card and thus can be also called a SIM card connector.

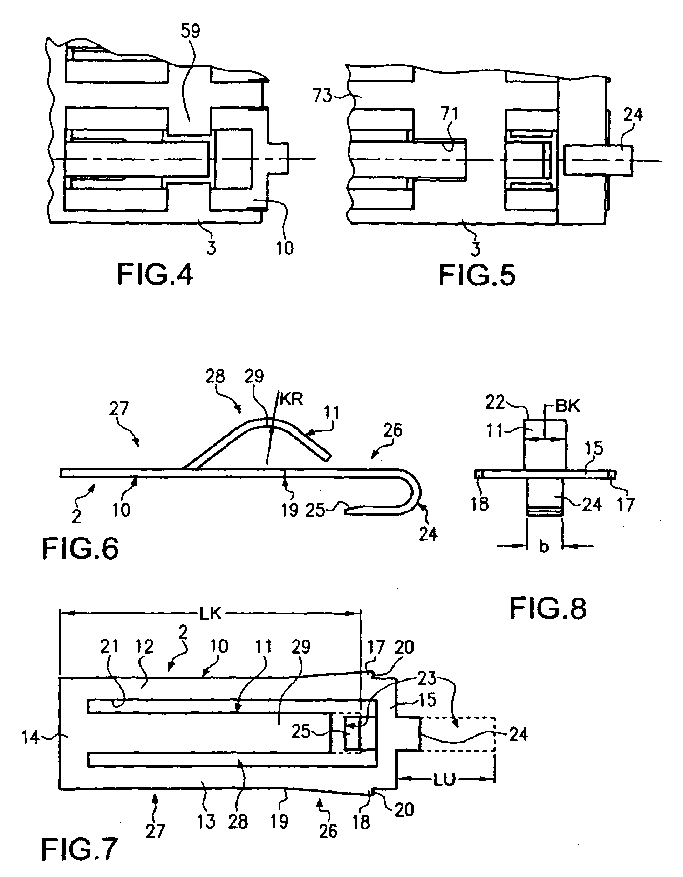

The smart card connector 1, please see also Figs 2 through 12, and in particular Figs. 2 and 3, comprises a contact support 3 within which generally six contact elements 2 are mounted. Each contact element 2 comprises - see Fig. 7 - a mounting section 26 and adjacent thereto a spring or bending section 27. The contact element 2 further comprises a contacting section 28. The contacting section 28 comprises in substance a contact element arm or contact arm 11.

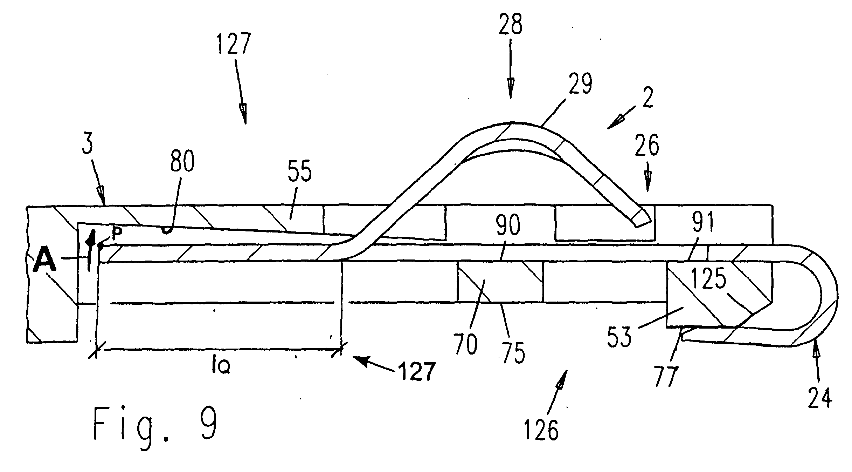

As is shown in Fig. 9, the contact arm 11 ends at its free end in a contact cusp 29. Fig. 9 also discloses that the contact support 3 which is typically injection molded from a plastic material comprises a mounting or fixing section 126 for fixedly mounting and holding the contact element 2 due to a cooperation between said mounting section 126 of the contact support 3 and the mounting section 26 of the contact element 2. The contact support 3 is further provided with a section 127, also called a spring movement allowance section 127, which allows a spring or resilient deflection or movement of a part of the contact element 2, i.e. of the spring section 27 at the time the contact cusp 28 of a contact element 2 is contacted by a contact zone of a smart card. The spring movement allowance section 127 provides a free space (Fig. 9) for the upward movement (Fig. 9) of the spring section 27 of the contact element 2. The free space is preferably provided by having an upper wall 55 of the contact support 3 provided with a tapered thickness. This is done by having the bottom surface 80 of the upper wall 55 being upwardly inclined by about 5 to 10; as shown in Fig. 9.

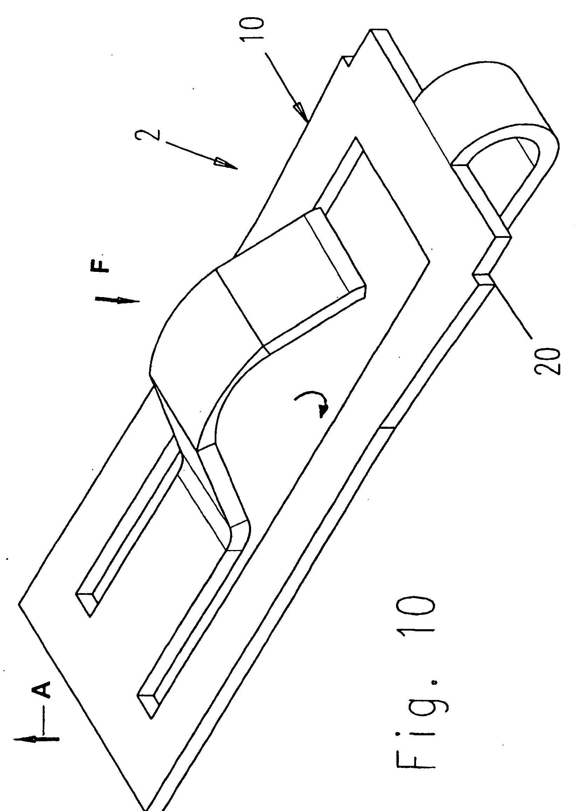

If, as is shown in Fig. 10, a force F is applied to the contact cusp 28, a frame 10 of the contact element 2, more specifically the spring section 27, is moved slightly in upward direction, such that the outermost point P (see Fig. 9) of the frame 10 or the spring section 27 moves about 0.12 mm upwardly in the direction of the arrow A. As is clear, the force F is typically applied by a contact zone of a SIM card or a smart card which is moved towards the upper surface of the upper wall 55. More specifically, the frame 10 can move slightly upwardly, as described, with the area IQ as referred to in Fig. 9 primarily with the earlier mentioned bending or spring movement section 27. This upward movement occurs in the above-mentioned spring allowance section 127 of the contact support 3.

In this context it should be noted that the smart card connector 1 shown in Fig. 1, which is designed as a SIM card connector, has a length of approximately 12.8 mm and a width B of approximately 7.6 mm. The thickness of the SIM card connector 1 is in the order of magnitude of 1.1 mm.

In an unactuated condition of the smart card connector the contact cusps 29 of the contact elements 2project by about 0.6 mm above an upper surface 110 (Fig. 3) of the upper wall 55. After this short summary of some essential features of the invention, firstly the contact element 2 and secondly the contact support 3 will be is described in detail.

### The Contact Element 2

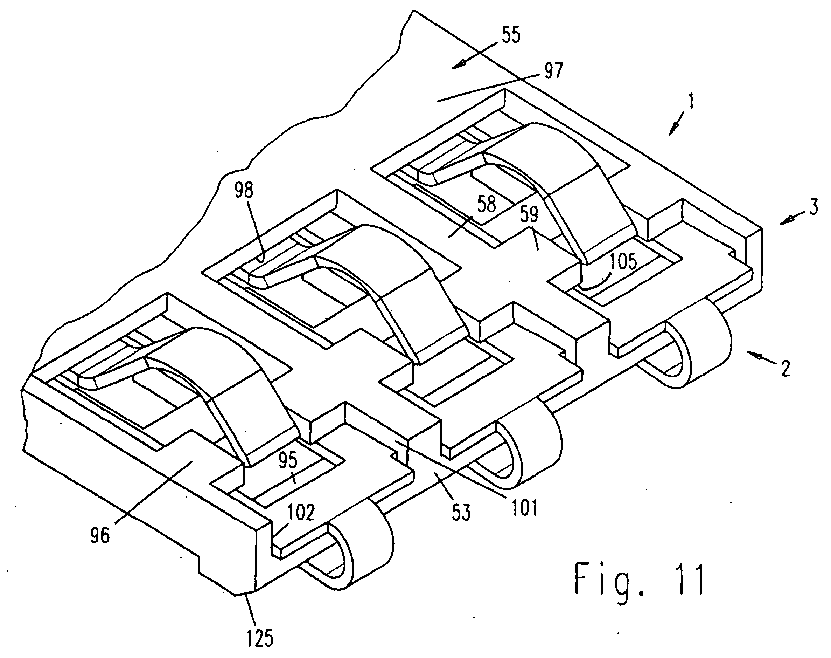

Figs. 6 through 8 as well as Figs. 9 and 10 disclose the contact element 2 in some detail. The contact element 2 comprises, as mentioned earlier, the frame 10. The frame 10 defines a plane above which the contact arm 11 projects upwardly as is shown in Fig. 6. The frame 10 - see in particular Fig. 7 - comprises a first longitudinal arm 12, a second longitudinal arm 13, a first transversal arm 14 and a second transversal arm 15. The contact arm 11 extends starting from the first transversal arm 14 in longitudinal direction towards the second transversal arm 15. The contact element 2 is preferably stamped out of sheet metal. Subsequent to the stamping operation there are bending or angling operations forming - see Fig. 7 - angled portion 23. There is an angled or bent portion 23 at an outward projection from the second transversal arm 15 which forms a bent around portion 24. The bent around portion 24 forms a mounting means. As is shown in particular in Fig. 7, at the two right ends of the first and second longitudinal arms 12 and 13, there are detent or mounting means in the form wedge shaped cutting edges 17, 18. Said cutting edges 13, 18 are adapted to cut into the plastic material of the contact support 3 at the time the contact element 2 is inserted into the contact support 3 from the right-hand side as shown for instance in Fig. 11. Figs. 6 through 8 disclose the starting point 19 for the mounting means 17, 18 which continuously widen in the direction towards the transversal arm 15. The mounting means 17, 18 end in frontal faces 20 which border a cut-out of the contact element 2 (Fig. 7 and 10).

As is also shown in Fig. 7, the contact element 23 forms with its frame 10 a cut-out or window 21 in the area of which extends the contact arm 11. The contact arm 11 is spaced from the longitudinal arms 12 and 13. The contact arm 11 extends, as mentioned, from the first transversal arm 14 and is integral therewith. The second transversal arm 15 forms the bent-around portion 24 and ends in an inclined section 25. As can be seen in particular in Figs. 9 and 11, the bent-around portion 24 resiliently grips a portion of the contact support 3 at the time the contact element 2 is inserted into the contact support 3. The inclined part 25 in cooperation with an inclination 125 (Fig. 9) at the contact support allows an easy and safe insertion of the contact element 2 in the mounting position of the contact element 2 shown in Fig. 9.

### The Contact Support 3

For instance Figs. 1, 2 and 11 disclose that the contact support 3 comprises a longitudinal side wall 51 as well as spaced therefrom a parallelly extending longitudinal side wall 52. In accordance with Fig.2 transversal walls, also called transversal ribs 53, 54 extend at the oppositely located transversal sides of the contact support 3 between the longitudinal side walls 51, 52. Moreover, at the bottom side of the contact support 3 a center rib 50 is provided, so as to provide reinforcement with regard to a bending movement of the contact support 3.

As shown in Figs. 1 and 2, the contact support 3 comprises an upper wall 55 (Fig. 1) and a bottom wall 56 (Fig. 2). The upper wall consists for all practical purposes of a transversal plate 57 which is also well-shown in Fig. 11. Extending from said transversal plate 57 are two longitudinal ribs 58 which extend in longitudinal direction of said contact support 3. Each two transversal ribs 59 extend from said longitudinal ribs 58.

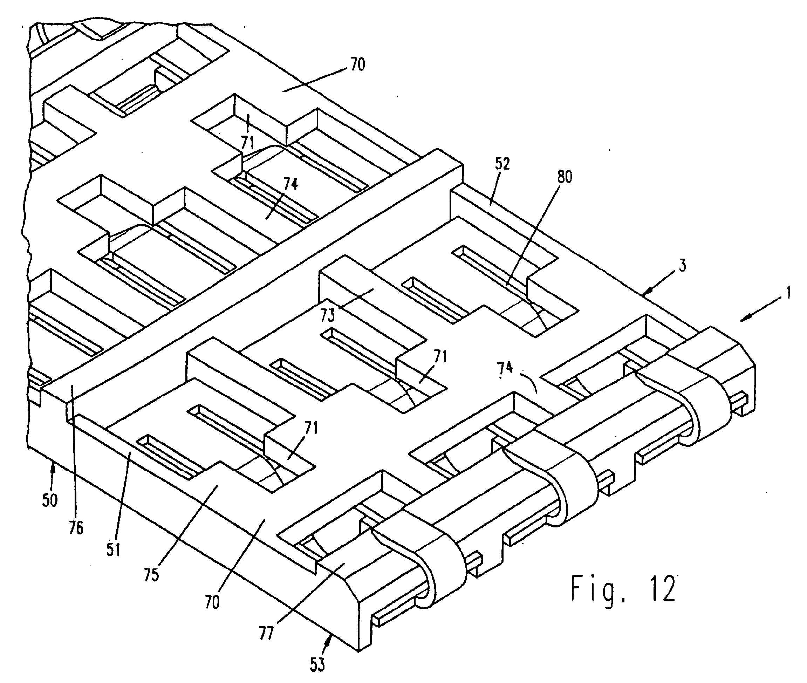

The bottom wall 56 - see Figs. 2 and12 - comprises between the longitudinal walls 51, 52 two spaced transversal plates 70 which form cut-outs 71. The transversal plates 70 form longitudinal ribs 73, 74 extending between respective ribs 54, 53. The bottom surfaces 76, 77 formed by said ribs are - see Fig. 12 - on an elevation somewhat higher than the bottom surface 75 of the transversal plate 70. Fig. 12 shows the already mentioned bottom side 80 of the contact support 3. Said bottom surface 80 which is formed by the upper wall 55 is - as is shown in Fig. 9 - inclined upwardly (leftwardly in Fig. 9) so as to form the free space mentioned earlier to allow for the small spring action movement of the spring section 27.

The mounting of the contact element 2 at the contact support 3 occurs in the following manner:
Firstly, by sliding the contact arm 11 into the space which is formed by the longitudinal ribs 58, the mounting means 17, 18 preferably in the form of inclined wedge shaped ribs cut into the side walls 101, 102 - see Fig. 11 - of the contact support and thus fixedly mount the contact element 2 in the contact support 2. The upper surfaces 95 (see Fig. 11) formed by the rib 53 form a support and the bottom sides 105 of the transversal or cross ribs 59 provide support in upward direction. As is shown in Fig. 9, the arrangement is such that the free end of the contact arm 11 can move downwardly without interference as can be seen in Fig. 11. Fig. 11 also discloses that the frontal surfaces of the transversal projections 59 provide for a lateral guidance of the contact cusp 29 of the contact arm 11. Moreover, Fig. 11 discloses that due to a respective design of the bottom surface 98 of the upper wall 55 a pre-tensioning or pre-biasing of the contact element 2, i.e. of its contact cusp 29 is possible.
Secondly, the mounting of the contact element 2 in the contact support 3 uses besides said mounting means in the form of cutting projections 18 additional mounting means in the form of the bent-around section 24. Said bent-around section 24 resiliently extends under the rib 53, 54 as is shown in Fig. 9 after the contact element 2 has been inserted into the contact support 3. The bent-around portion 24 is also preferably used with its bottom surface as a soldering termination.

### Industrial Applicability

The contact element of the invention can be easily manufactured and provides a reliable contact action between the contact zones of a smart card and an apparatus in which the contact element is used. The contact element of the invention has only a small height and thus, a smart card reader using the contact elements of the invention has also a very small height dimension.

## Claims

1. A smart card connector (1), in particular a SIM card connector, comprising:
a contact support (3),
contact elements (2) mounted in said contact support (3),
said contact elements being adapted to provide contact between contact zones of a smart card and a SIM card, respectively, and
wherein the contact element (2) comprises:
a frame (10) forming a window (21) adapted to generate part of the spring force of the contact element, and having a spring section (27) adapted to move slightly in upward direction,
a contact arm (29) integrally formed with said frame and extending out of the plane defined by said frame, said contact arm having a contact cusp (29), and
mounting means (24) at the frame for mounting said frame and said contact element at the contact support (3).

2. The smart card connector of claim 1, wherein said frame (10) has a rectangular shape and forms at one end mounting means for attachment to the contact support and forms at the opposite and resilient or spring section from which a contact arm extends out of a plane defined by said frame.

3. The smart card connector of claim 1, wherein the contact element comprises a contact section arranged between a mounting section and a bending section.

4. The smart card connector of claim 1, wherein a contact element arm (11) having at its free end a contact cusp (29) extends from the frame (10) of the contact element (2) and out of a plane defined by said frame (10).

5. The smart card connector of claim 1, wherein the contact element arm (11) comprises two longitudinal arms connected by two oppositely arranged transversal arms (14) and wherein detent elements are provided at the longitudinal arm.

6. The smart card connector of claim 1, wherein the contact support (3) comprises a mounting section (128) for the contact element and further a spring action allowance section (127) allowing the spring movement of the contact elements.

7. The smart card connector of claim 1, wherein the contact support (3) provides at its bottom side (80) a free space.

8. The smart card connector of claim 1, wherein the movable contact cusp (29) is located adjacent to the mounting of the contact element at the contact support.

9. The smart-card connector of claim 1, wherein the contact support (3) comprises a longitudinal side wall (51) as well as spaced therefrom a parallelly extending longitudinal side wall (52) with transversal walls, also called transversal ribs (53, 54) extending at the oppositely located transversal sides of the contact support (3) between the longitudinal side walls (51, 52).

10. The smart-card connector of claim 9, wherein at the bottom side of the contact support (3) a center rib (50) is provided, so as to provide reinforcement with regard to a bending movement of the contact support (3).

11. The Smart-card connector according to claim 10, wherein the bottom wall (56) comprises between the longitudinal walls (51, 52) two spaced transversal plates (70) which form cut-outs (71), the transversal plates (70) form longitudinal ribs (73, 74) extending between respective ribs (54. 53) and the bottom surfaces (76, 77) formed by said ribs are on an elevation somewhat higher than the bottom surface (75) of the transversal plate (70).

12. The smart-card connector according to claim 11, wherein said bottom surface (80) which is formed by the upper wall (55) is inclined upwardly so as to form the free space mentioned earlier to allow for the small spring action movement of the spring section (27).

13. The smart card connector of claim 1, wherein detent means are provided laterally at the frame.

## Patentansprüche

1. Ein Smart-Card Connector (1), insbesondere ein SIM-Card Connector der Folgendes aufweist:
einen Kontaktträger (3),
in dem Kontaktträger (3) angeordnete Kontaktelemente (2),
wobei die Kontaktelemente geeignet sind um einen Kontakt zwischen Kontaktzonen der Smart-Card bzw. einer SIM-Card vorzusehen, und
wobei das Kontaktelement (2) einen ein Fenster (21) bildenden Rahmen (10) aufweist, und zwar geeignet zur Erzeugung eines Teils der Federkraft des Kontaktelements und ferner mit einem Federabschnitt (27), geeignet für eine leichte Bewegung in Aufwärtsrichtung,
wobei ein Kontaktarm (29) integral mit dem Rahmen geformt ist und sich aus der durch den Rahmen definierten Ebene heraus erstreckt, und wobei der Kontaktarm eine Kontaktkuppe (29) besitzt und
Befestigungsmittel (24) am Rahmen zur Befestigung des Rahmens und des Kontaktelements an dem Kontaktträger (3).

2. Smart-Card Connector nach Anspruch 1, wobei der Rahmen (10) eine rechteckige Form besitzt, und an einem Ende Befestigungsmittel zur Befestigung am Kontaktträger, und am entgegengesetzten Ende einen elastischen oder Federabschnitt bildet, von dem aus sich ein Kontaktarm aus einer durch den Rahmen definierten Ebene heraus erstreckt.

3. Smart-Card Connector nach Anspruch 1, wobei das Kontaktelement einen Kontaktabschnitt, angeordnet zwischen einem Befestigungsabschnitt und einem Biegeabschnitt aufweist.

4. Smart-Card Connector nach Anspruch 1, wobei ein Kontaktelementarm (11) an seinem freien Ende eine Kontaktkuppe (29) aufweist, die sich vom Rahmen (10) des Kontaktelements (2) und aus der durch den Rahmen (10) definierten Ebene heraus erstreckt.

5. Smart-Card Connector nach Anspruch 1, wobei der Kontaktelementarm (11) zwei Längsarme aufweist, und zwar verbunden mit zwei entgegengesetzt angeordneten Querarmen (14), und wobei Rastelemente am Längsarm vorgesehen sind.

6. Smart-Card Connector nach Anspruch 1, wobei der Kontaktträger (3) einen Befestigungsabschnitt (128) für das Kontaktelement und ferner einen eine Federwirkung gestattenden Abschnitt (127) aufweist, der die Federbewegung der Kontaktelemente gestattet.

7. Smart-Card Connector nach Anspruch 1, wobei der Kontaktträger (3) an seiner unteren Seite (80) einen freien Raum vorsieht

8. Smart-Card Connector nach Anspruch 1, wobei die bewegliche Kontaktkuppe (29) benachbart zur Befestigung des Kontaktelements am Kontaktträger angeordnet ist.

9. Smart-Card Connector nach Anspruch 1, wobei der Kontaktträger (3) eine sich längs erstreckende Seitenwand (51), und auch beabstandet davon eine sich parallel erstreckende in Längsrichtung verlaufende Seitenwand (52) mit Querwänden aufweist, wobei letztere auch als Querrippen (53, 54) bezeichnet sind, die sich an entgegengesetzt angeordneten Querseiten des Kontaktträgers (3) erstrecken, und zwar zwischen den in Längsrichtung verlaufenden Seitenwänden (51, 52).

10. Smart-Card Connector nach Anspruch 9, wobei an der Bodenseite des Kontaktträgers (3) eine Mittelrippe (50) vorgesehen ist, um so eine Verstärkung bezüglich einer Biegebewegung des Kontaktträgers (3) vorzusehen.

11. Smart-Card Connector nach Anspruch 10, wobei die Bodenwand (56) zwischen den sich in Längsrichtung erstreckenden Wänden (51, 52) zwei beabstandete Querplatten (70) aufweist, die Ausschnitte (71) bilden, wobei die Querplatten (70) sich zwischen entsprechenden Rippen (54, 53) erstreckende Längsrippen (73, 74) aufweisen, und wobei die Bodenoberflächen (76, 77), gebildet durch die Rippen, sich auf einer Höhe befinden, die etwas höher ist als die Bodenoberfläche (75) der Querplatte (70).

12. Smart-Card Connector nach Anspruch 11, wobei die durch die Oberwand (55) gebildete Bodenoberfläche (80) nach oben derart geneigt ist, dass der erwähnte freie Raum gebildet wird, so dass die kleine Federwirkungsbewegung des Federabschnitts (27) gestattet ist.

13. Smart-Card Connector nach Anspruch 1, wobei Rastmittel seitlich am Rahmen vorgesehen sind.

## Revendications

1. Connecteur de carte à puce (1), en particulier connecteur de carte SIM comprenant :
un support de contact (3) ;
des éléments de contact (2) montés sur le support de contact (3), les éléments de contact étant adaptés à assurer un contact entre les zones de contact d'une carte à puce et une carte SIM, respectivement, et
dans lequel l'élément de contact (2) comprend :
un cadre (10) dans lequel est formée une fenêtre (21) adapté à produire une partie de la force élastique de l'élément de contact et comprenant une partie de ressort (27) adaptée à se déplacer légèrement vers le haut ;
un bras de contact (29) formé d'une seule pièce avec le cadre et s'étendant en dehors du plan défini par le cadre, de bras de contact (29) comportant un arrondi de contact, et
un moyen de montage (24) au niveau du cadre pour monter le cadre et l'élément de contact au niveau du support de contact (3).

2. Connecteur de carte à puce selon la revendication 1, dans lequel le cadre (10) a une forme rectangulaire et forme à une extrémité un moyen de montage pour fixation au support de contact et forme à l'opposé une partie élastique ou de ressort à partir de laquelle un bras de contact s'étend en dehors d'un plan défini par le cadre.

3. Connecteur de carte à puce selon la revendication 1, dans lequel l'élément de contact comprend une partie de contact disposée entre une partie de montage et une partie de courbure.

4. Connecteur de carte à puce selon la revendication 1, dans lequel un bras d'élément de contact (11) ayant à son extrémité libre un arrondi de contact (29) s'étend à partir du cadre (10) de l'élément de contact (2) et en dehors d'un plan défini par le cadre (10).

5. Connecteur de carte à puce selon la revendication 1, dans lequel l'élément de bras de contact (11) comprend deux bras longitudinaux connectés par deux bras transverses (14) disposés de façon opposée et dans lequel des éléments de butée sont prévus au niveau du bras longitudinal.

6. Connecteur de carte à puce selon la revendication 1, dans lequel le support de contact (3) comprend une partie de montage (128) pour l'élément de contact et en outre une partie permettant une action de ressort (127) permettant le déplacement du ressort des éléments de contact.

7. Connecteur de carte à puce selon la revendication 1, dans lequel le support de contact (3) comporte au niveau de son côté inférieur (80) un espace libre.

8. Connecteur de carte à puce selon la revendication 1, dans lequel l'arrondi de contact mobile (29) est disposé au voisinage du montage de l'élément de contact au niveau du support de contact.

9. Connecteur de carte à puce selon la revendication 1, dans lequel le support de contact (3) comprend une paroi latérale longitudinale (51) ainsi que, espacée de celle-ci, une paroi latérale longitudinale s'étendant parallèlement (52), des parois transverses, également appelées nervures transverses, (53, 54) s'étendant au niveau des bords transverses disposés de façon opposée au support de contact (3) entre les parois latérales longitudinales (51, 52).

10. Connecteur de carte à puce selon la revendication 9, dans lequel, au niveau du côté inférieur du support de contact (3), une nervure centrale (50) est prévue de façon à former un renfort par rapport à un mouvement de courbure du support de contact (3).

11. Connecteur de carte à puce selon la revendication 10, dans lequel la paroi inférieure (56) comprend entre les parois longitudinales (51, 52) deux plaques transverses espacées (70) qui forment des découpes (71), les plaques transverses (70) formant des nervures longitudinales (73, 74) s'étendant entre des nervures respectives (54, 53) et les faces inférieures (76, 77) formées par les nervures sont sur une élévation quelque peu supérieure à la face inférieure (75) de la plaque transverse (70) .

12. Connecteur de carte à puce selon la revendication 11, dans laquelle la face inférieure (80) qui est formée par la paroi supérieure (55) est inclinée vers le haut de façon à former l'espace libre susmentionné pour permettre le petit déplacement d'action élastique de la partie de ressort (27).

13. Connecteur de carte à puce selon la revendication 1, dans lequel des moyens de butée sont prévus latéralement au niveau du châssis.
